# FASCICULE DE BREVET EUROPEEN

(11) **EP 0 826 890 B1**
(45) Date de publication et mention de la délivrance du brevet: **27.03.2002**
(21) Numéro de dépôt: 97410089.3
(22) Date de dépôt: 12.08.1997
(51) Int. Cl.: F16B 45/02

(54) **Mousqueton à verrou**
Karabinerhaken mit Verriegelungsvorrichtung
Snap hook with locking device

(30) Priorité: 30.08.1996 FR 9610800
(43) Date de publication de la demande: 04.03.1998
(73) Titulaire: ZEDEL, F-38920 Crolles (FR)
(72) Inventeur: Maurice, Alain, 38610 Gieres (FR); Petzl, Paul, 38530 Barraux (FR)
(74) Mandataire: Hecké, Gérard

(56) Documents cités:
- EP-A- 0 730 102
- DE-U- 9 110 358
- FR-A- 2 146 703
- FR-A- 2 461 146

## Description

L'invention est relative à un mousqueton comprenant un corps fixe en forme de C, ayant une première extrémité conformée en un élément de retenue, et une deuxième extrémité d'articulation d'un doigt mobile autour d'un axe de pivotement entre une position fermée, et une position ouverte, ledit doigt comportant:
- un élément d'accrochage situé à l'opposé de l'axe de pivotement pour coopérer avec l'élément de retenue dans la position fermée,
- un ressort de rappel du doigt vers la position fermée,
- une bague de verrouillage montée coaxialement autour du doigt entre une première position verrouillée autorisant un blocage positif du doigt dans la position fermée, et une deuxième position déverrouillée permettant le déplacement du doigt vers la position ouverte, ladite bague ayant une longueur inférieure à celle du doigt, et séparée en permanence de l'axe par un intervalle axial.

Les mousquetons connus équipés de bagues de verrouillage du genre mentionné, utilisent généralement des bagues à vis ou à baïonnette. Dans le cas des bagues à vis, le passage de la deuxième position déverrouillée vers la première position verrouillée impose un vissage de plusieurs tours de la bague pour la déplacer en translation le long du doigt pendant une course de quelques millimètres de manière à recouvrir efficacement l'élément de retenue du corps. Cette opération de vissage est fastidieuse et nécessite un temps de manoeuvre relativement long. Le même inconvénient subsiste lors du dévissage pour le passage de la bague de la première position verrouillée vers la deuxième position déverrouillée. Dans le cas d'une bague à baïonnette, le blocage du doigt en position fermée s'opère par un premier déplacement en translation de la bague vers le haut à l'encontre de la force d'un ressort, suivi d'un deuxième déplacement en rotation limitée. Après relâchement, la bague est soumise à un léger mouvement de recul, et est maintenue dans la première position de blocage par la force élastique du ressort. Un déverrouillage intempestif de la bague reste néanmoins possible en présence de forces de friction exercées par la corde.

L'objet de l'invention consiste à réaliser un mousqueton équipé d'une bague rotative de sécurité à verrouillage positif, et à manipulation facile.

Le mousqueton selon l'invention est caractérisé en ce que le doigt est équipé d'un verrou ayant un organe de commande destiné à coopérer alternativement avec un trou ou une encoche disposés dans la bague de verrouillage avec un décalage angulaire prédéterminé, respectivement dans la première position verrouillée pour assurer ledit blocage positif en rotation de ladite bague lors de l'insertion de l'organe de commande dans le trou, et dans une deuxième position déverrouillée avec formation d'une liaison interne à point dur entre la bague et ledit doigt lors de l'engagement de l'organe de commande dans l'encoche, le passage de la deuxième position déverrouillée vers la première position verrouillée s'opérant manuellement par un mouvement en rotation de la bague provoquant la libération du point dur en début de course suite à la réaction de la bague sur l'organe de commande, et l'insertion de l'organe de commande dans le trou en fin de course pour le blocage positif en rotation de la bague.

Le déplacement manuel en rotation de la bague de la deuxième position déverrouillée vers la première position verrouillée, et vice-versa s'effectue soit dans le sens des aiguilles d'une montre, soit dans le sens opposé.

Selon un mode de réalisation préférentiel, le verrou comporte un téton télescopique monté dans un orifice du doigt, en étant associé à un ressort de compression sollicitant le téton selon une direction radiale pour l'engagement dans le trou ou l'encoche de la bague, le passage de la première position verrouillée vers la deuxième position déverrouillée nécessitant un enfoncement préalable du téton vers une position inactive, avant l'actionnement en rotation de la bague.

Selon une autre caractéristique de l'invention préférentiel, le trou traverse radialement la paroi de la bague de verrouillage, tandis que l'encoche est borgne et présente une forme conjuguée à celle de la surface de butée du téton.

D'autres avantages et caractéristiques de l'invention ressortiront plus clairement de la description qui va suivre, donnée uniquement à titre d'exemple non limitatif, et représentée aux dessins annexés dans lesquels:
- les figures 1 et 2 sont des vues en élévation du mousqueton selon l'invention, le doigt étant fermé et verrouillé par la bague de verrouillage;
- la figure 3 montre une vue identique de la figure 1, avec le doigt fermé dans l'état déverrouillé de la bague;
- la figure 4 est une vue identique de la figure 3, avec le doigt ouvert;
- les figures 5 et 6 montrent des vues de profil respectives des figures 1 et 3;
- la figure 7 est une vue en coupe du doigt de la figure 1;
- les figures 8 et 9 représentent des vues en coupe selon la ligne 8-8 de la figure 7, respectivement dans l'état verrouillé, et dans l'état déverrouillé de la bague.

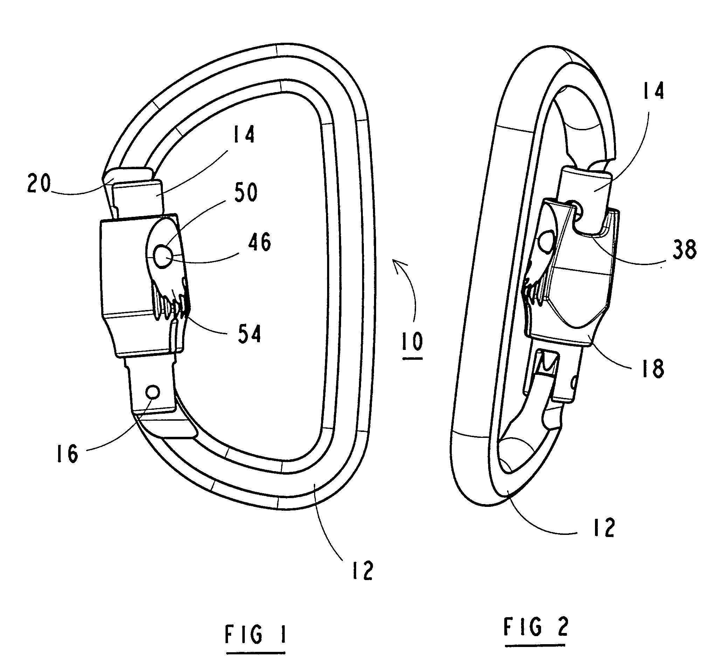

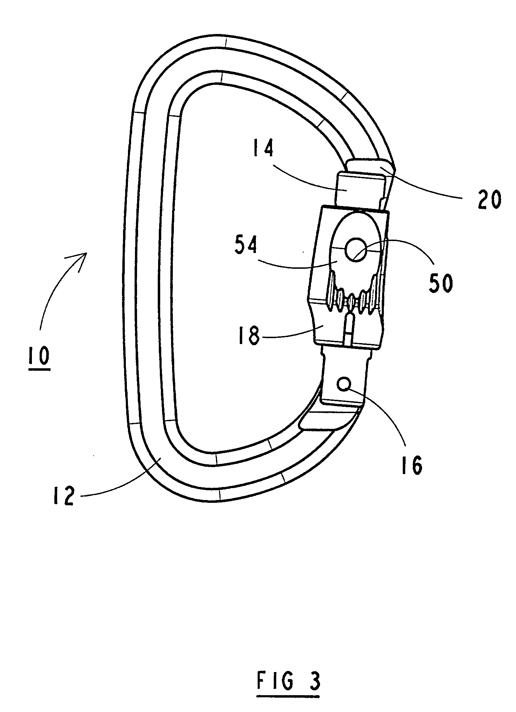

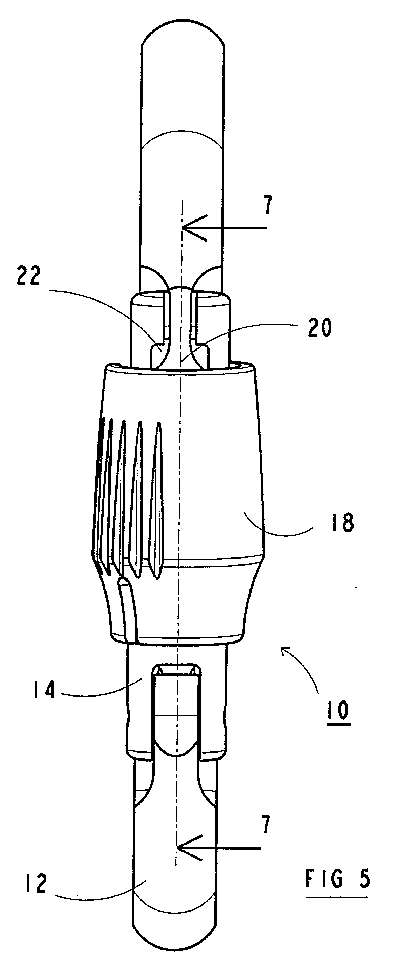

Sur les figures 1 à 7, un mousqueton 10 pour l'escalade comporte un corps 12 métallique en forme de C, et un doigt 14 mobile monté à pivotement sur un axe 16 situé à l'extrémité inférieure du corps 12. Le doigt 14 mobile est équipé d'une bague de verrouillage 18 coaxiale, montée avec un léger jeu radial en rotation libre autour du doigt 14 entre une première position verrouillée (figures 1, 2 et 5), et une deuxième position déverrouillée (figure 3).

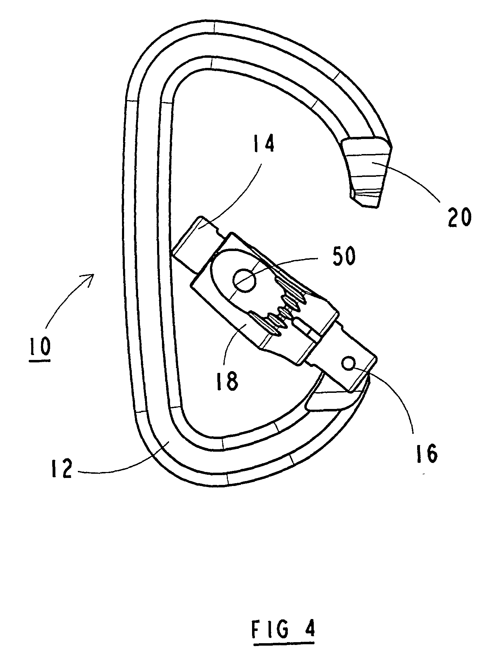

Dans la position déverrouillée de la figure 3, le doigt 14 est déplaçable vers l'intérieur du corps 12, autorisant l'ouverture du mousqueton (figure 4) pour permettre soit l'introduction d'une corde ou d'une sangle, soit l'accrochage du mousqueton à un organe d'amarrage (non représenté).

L'extrémité supérieure du corps 12 est pourvue d'un élément de retenue mâle 20 apte à s'engager dans un élément d'accrochage femelle 22 du doigt 14 lors de son retour vers la position de fermeture (figure 1) sous l'action d'un ressort de rappel 24. L'élément mâle 20 présente une structure de T renversé comportant une languette prolongée par une protubérance en forme de chape. L'élément femelle 22 du doigt 14 est situé à l'opposé de l'axe 16 de pivotement, et comprend un évidement de forme conjuguée à l'élément mâle 20. La longueur de la bague de verrouillage 18 présente une longueur inférieure à celle du doigt 14, et est séparée en permanence de l'axe 16 par un intervalle axial. La partie inférieure de la bague 18 est doté d'une collerette annulaire 30 engagée avec jeu dans une rainure 32 du doigt 14.

En position verrouillée, la partie supérieure de la bague 18 se trouve en regard de la protubérance de l'élément mâle 20, ce qui empêche tout pivotement du doigt 14 vers l'intérieur lors d'une action de poussée s'exerçant perpendiculairement par rapport à la direction longitudinale de la bague 18 .

Le bord supérieur de la bague de verrouillage 18 comporte une fente 38 autorisant le passage de la protubérance de l'élément mâle 20 lorsque la bague 18 se trouve dans la deuxième position déverrouillée. L'ouverture du doigt 14 est alors possible par une action de poussée faisant pivoter le doigt 14 autour de l'axe 16 vers la position d'ouverture de la figure 4.

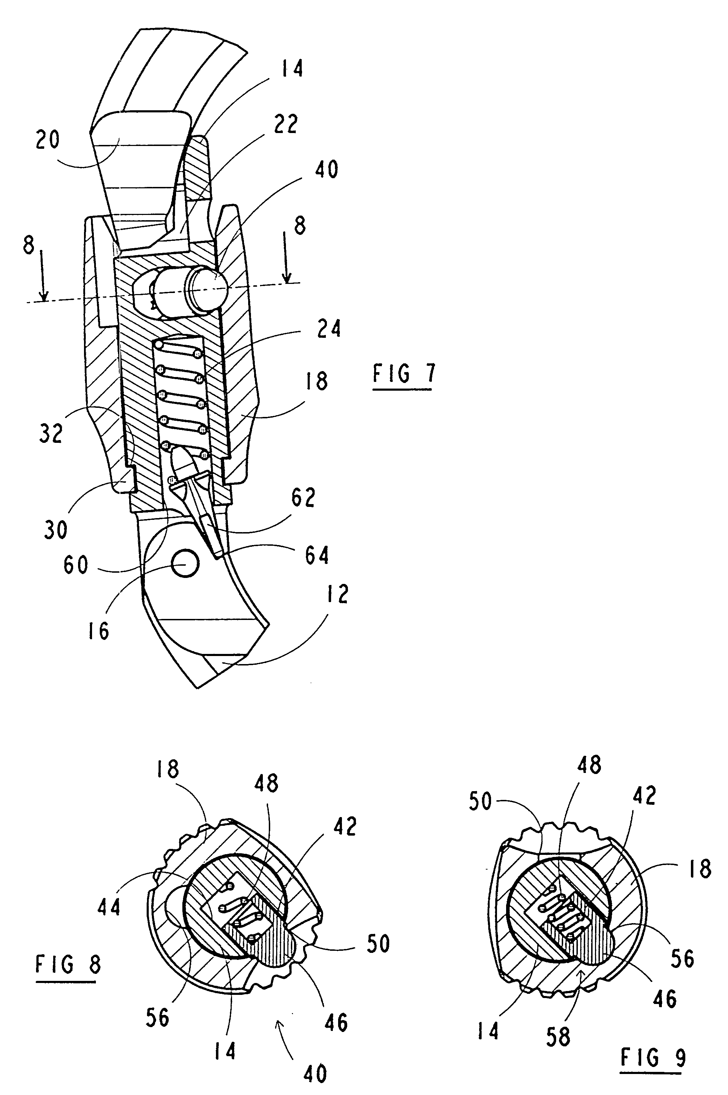

Le doigt 14 mobile est équipé en plus d'un verrou 40 susceptible de bloquer positivement la bague 18 dans la première position verrouillée. Selon le mode de réalisation des figures 8 et 9, le verrou 40 comporte un téton 42 télescopique monté dans un orifice 44 radial du doigt 14, et pourvu d'une surface de butée 46 arrondie, notamment en forme de bille. Le téton 42 est associé à un ressort 48 de compression logé dans l'orifice 44, et sollicitant la surface de butée 46 selon la direction radiale.

La bague de verrouillage 18 est munie d'un trou 50 circulaire autorisant la venue en saillie de la surface de butée 46 du téton 42 dans la première position verrouillée. Dans cette position de verrouillage positif (figure 8), tout mouvement de rotation de la bague 18 vers la deuxième position déverrouillée est rendu impossible, et le doigt 14 reste fermé avec une sécurité totale, indépendamment de tout effort s'exerçant sur le doigt 14.

Le trou 50 de passage du téton 42 est situé au fond d'une surface de préhension 54 en forme de cuvette, ce qui facilite l'action d'enfoncement du verrou 40 pour le passage vers la position déverrouillée.

Une encoche 56 borgne est prévue dans la paroi interne cylindrique de la bague de verrouillage 18 au niveau de verrou 40, ladite encoche étant décalée angulairement du trou 50, et présentant une forme conjuguée à celle de la surface de butée 46 arrondie du téton 42. Dans la position déverrouillée de la bague 18 illustrée à la figure 9, la surface de butée 46 du téton 42 s'engage dans l'encoche 56 borgne, de manière à constituer un point dur. Le seuil de dégagement de ce point dur nécessite un certain effort au début de la rotation de la bague 18, et indépendamment du sens de rotation.

Le décalage angulaire entre le trou 50 et l'encoche 56 de la bague de verrouillage 18 correspond à la course nécessaire pour le passage de la première position verrouillée vers le deuxième position déverrouillée, et vice-versa.

Le ressort de rappel 24 s'étend dans un alésage 60 borgne et excentré du doigt 14, la base du ressort 24 étant associée à une queue 62 prenant appui sur un rebord 64 du corps 12. La flexion du ressort 24 lors de l'ouverture du doigt 14 tend à le ramener automatiquement en position fermée dès que l'utilisateur le relâche.

Le fonctionnement du mousqueton 10 selon les figures 1 à 9 est le suivant:

Dans la position fermée du mousqueton 10 (figures 1, 2 et 5 ), le verrou 40 est actif pour le blocage de la bague de verrouillage 18 dans la première position verrouillée. La partie supérieure de la bague 18 constitue un moyen d'arrêt qui empêche tout mouvement de pivotement du doigt 14 vers l'intérieur du corps 12. Le ressort 48 maintient la surface de butée 46 du verrou 40 dans le trou 50 de la bague 18 pour immobiliser cette dernière en rotation (figure 8). La surface de butée 46 est saillante, et est apparente de l'extérieur.

L'ouverture du doigt 14 mobile est possible suite au déplacement en rotation de la bague 18 vers la deuxième position déverrouillée, lequel déplacement n'est autorisé qu'après un déblocage préalable du verrou 40 s'effectuant par une action d'enfoncement du téton 42 à l'encontre de la force de rappel du ressort 48 de compression.

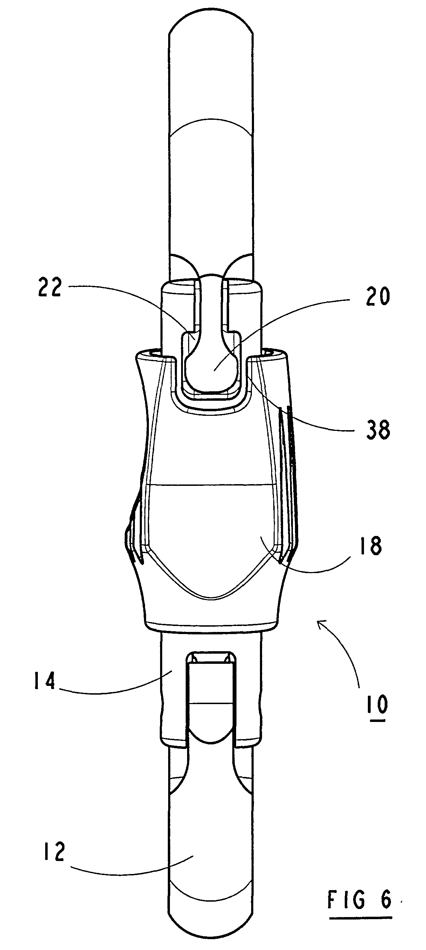

Le déplacement manuel en rotation de la bague 18 peut être opéré dans le sens des aiguilles d'une montre, ou dans le sens inverse, et la deuxième position déverrouillée est obtenue lorsque l'encoche 56 de la bague 18 arrive en regard du téton 42 du doigt 14. Le ressort 48 pousse ensuite la surface de butée 46 dans l'encoche 56, de manière à constituer un point dur 58 qui maintient la bague 18 dans ladite deuxième position (figure 9). Cette liaison interne à point dur 58 entre la bague 18 et le doigt 14 n'est pas visible de l'extérieur. La bague 18 se trouve dans la position déverrouillée des figures 3 et 6, et il est alors possible de faire pivoter le doigt 14 vers la position d'ouverture (figure 4).

Après le relâchement de l'effort de poussée, le ressort de rappel 24 ramène automatiquement le doigt 14 mobile vers la position fermée (figure 3). Le verrou 40 reste néanmoins dans la deuxième position déverrouillée, indiquée à la figure 9. Le passage vers la première position verrouillée nécessite un actionnement manuel en rotation de la bague de verrouillage 18 provoquant en début de course, la libération du point dur 58 suite à la réaction de la bague 18 sur la surface de butée 46 entraînant le recul du téton 42, et en fin de course l'insertion de la surface de butée 46 dans le trou 50 pour le verrouillage positif de la bague 18. Le mouvement d'actionnement manuel de la bague de verrouillage 18 peut être opéré indifféremment dans le sens des aiguilles d'une montre, ou dans le sens opposé.

La bague de verrouillage 18 est en matériau métallique ou plastique et le verrou 40 pourrait être réalisé différemment, notamment au moyen d'un levier d'accrochage pivotant.

## Revendications

1. Mousqueton comprenant un corps (12) fixe en forme de C, ayant une première extrémité conformée en un élément de retenue (20), et une deuxième extrémité d'articulation d'un doigt (14) mobile autour d'un axe de pivotement (16) entre une position fermée et une position ouverte, ledit doigt (14) comportant:
- un élément d'accrochage (22) situé à l'opposé de l'axe de pivotement (16) pour coopérer avec l'élément de retenue (20) dans la position fermée,
- un ressort (24) de rappel du doigt (14) vers la position fermée,
- une bague de verrouillage (18) montée coaxialement autour du doigt (14) entre une première position verrouillée autorisant un blocage positif du doigt dans la position fermée, et une deuxième position déverrouillée permettant le déplacement du doigt (14) vers la position ouverte, ladite bague ayant une longueur inférieure à celle du doigt (14), et séparée en permanence de l'axe (16) par un intervalle axial,
**caractérisé en ce que** le doigt (14) est équipé d'un verrou (40) ayant un organe de commande destiné à coopérer alternativement avec un trou (50) ou une encoche (56) disposés dans la bague de verrouillage (18) avec un décalage angulaire prédéterminé, respectivement dans la première position verrouillée pour assurer ledit blocage positif en rotation de ladite bague lors de l'insertion de l'organe de commande dans le trou (50), et dans une deuxième position déverrouillée avec formation d'une liaison interne à point dur (58) entre la bague (18) et ledit doigt (14) lors de l'engagement de l'organe de commande dans l'encoche (56), le passage de la deuxième position déverrouillée vers la première position verrouillée s'opérant manuellement par un mouvement en rotation de la bague (18) provoquant la libération du point dur en début de course suite à la réaction de la bague (18) sur l'organe de commande, et l'insertion de l'organe de commande dans le trou (50) en fin de course pour le blocage positif en rotation de la bague (18).

2. Mousqueton selon la revendication 1, **caractérisé en ce que** le déplacement manuel en rotation de la bague (18) de la deuxième position déverrouillée vers la première position verrouillée, et vice-versa s'effectue soit dans le sens des aiguilles d'une montre, soit dans le sens opposé.

3. Mousqueton selon la revendication 1 ou 2, **caractérisé en ce que** le verrou (40) comporte un téton (42) télescopique monté dans un orifice (44) du doigt (14), en étant associé à un ressort (48) de compression sollicitant le téton (42) selon une direction radiale pour l'engagement dans le trou (50) ou l'encoche (56) de la bague (18), le passage de la première position verrouillée vers la deuxième position déverrouillée nécessitant un enfoncement préalable du téton (42) vers une position inactive, avant l'actionnement en rotation de la bague (18).

4. Mousqueton selon la revendication 3, **caractérisé en ce que** le trou (50) traverse radialement la paroi de la bague de verrouillage (18), tandis que l'encoche (56) est borgne et présente une forme conjuguée à celle de la surface de butée (46) du téton (42).

5. Mousqueton selon la revendication 1, **caractérisé en ce que** le bord supérieur de la bague de verrouillage (18) est pourvu d'une fente (38) autorisant l'entrée ou la sortie de l'élément d'accrochage (22) dans l'élément de retenue (20) lorsque la bague de verrouillage (18) se trouve dans la deuxième position déverrouillée.

## Patentansprüche

1. Karabiner mit einem festen, C-förmigen Körper (12) mit einem ersten Ende, das als Rückhalteelement (20) ausgebildet ist, und einem zweiten Ende, das ein Drehbefestigungsende für einen um eine Schwenkachse (16) zwischen einer geschlossenen und einer offenen Position beweglichen Finger (14) ist, welcher Finger (14) umfasst:
- ein Befestigungselement (22), das entgegengesetzt zur Schwenkachse (16) angeordnet ist, um in geschlossener Position mit dem Rückhalteelement (20) zusammenzuwirken,
- eine Rückholfeder (24) für den Finger (14) in die geschlossene Position,
- einen Verriegelungsring (18), der koaxial um den Finger (14) zwischen einer ersten, verriegelten Position, welche eine sichere Blockierung des Fingers in geschlossener Position gewährleistet, und einer zweiten, entriegelten Position montiert ist, welche die Bewegung des Fingers (14) in die offene Position erlaubt, wobei der Ring kürzer ist als der Finger (14) und durch einen Axialabstand ständig von der Achse (16) getrennt ist,
**dadurch gekennzeichnet, dass** der Finger (14) mit einem Riegel (40) versehen ist, der eine Betätigungsvorrichtung aufweist, die dazu bestimmt ist, abwechselnd mit einer Öffnung (50) oder einer Vertiefung (56) zusammenzuwirken, die in dem Verriegelungsring (18) mit einem vorbestimmten Winkelversatz angeordnet sind, und zwar jeweils in der ersten, verriegelten Position, um die sichere Dreh-Arretierung des Rings beim Einführen der Betätigungsvorrichtung in die Öffnung (50) sicherzustellen, und einer zweiten, entriegelten Position unter Bildung einer inneren Verbindung mit einer harten Stelle (58) zwischen dem Ring (18) und dem Finger (14) beim Einführen der Betätigungsvorrichtung in die Vertiefung (56), wobei der Übergang aus der zweiten, entriegelten in die erste, verriegelte Position manuell durch eine Drehbewegung des Rings (18) erfolgt, welche die Freigabe der harten Stelle zu Beginn des Hubs durch den Gegendruck des Rings (18) auf die Betätigungsvorrichtung und das Einführen der Betätigungsvorrichtung in die Öffnung (50) am Ende des Hubs zur sicheren Dreh-Arretierung des Rings (18) bewirkt.

2. Karabiner nach Anspruch 1, **dadurch gekennzeichnet, dass** die manuelle Drehbewegung des Rings (18) aus der zweiten, entriegelten in die erste, verriegelte Position und umgekehrt entweder im oder gegen den Uhrzeigersinn erfolgt.

3. Karabiner nach Anspruch 1 oder 2, **dadurch gekennzeichnet, dass** der Riegel (40) einen Teleskop-Zapfen (42) umfasst, der in einer Öffnung (44) des Fingers (14) montiert und an eine Druckfeder (48) gekoppelt ist, die den Zapfen (42) zum Einführen in die Öffnung (50) oder Vertiefung (56) des Rings (18) in einer Radialrichtung beansprucht, wobei der Übergang aus der ersten, verriegelten in die zweite, entriegelte Position vor der Drehbetätigung des Rings (18) vorab das Eindrücken des Zapfens (42) in eine passive Position erfordert.

4. Karabiner nach Anspruch 3, **dadurch gekennzeichnet, dass** die Öffnung (50) radial durch die Wand des Verriegelungsrings (18) geführt ist, während die Vertiefung (56) blind ist und eine zu der der Anschlagfläche (46) des Zapfens (42) passende Form aufweist.

5. Karabiner nach Anspruch 1, **dadurch gekennzeichnet, dass** der obere Rand des Verriegelungsrings (18) einen Schlitz (38) umfasst, der das Einführen oder Herausziehen des Befestigungselements (22) in das bzw. aus dem Rückhalteelement (20) erlaubt, wenn sich der Ring (18) in der zweiten, entriegelten Position befindet.

## Claims

1. A snap-hook comprising a C-shaped fixed body (12), having a first end shaped as a securing element (20) and a second end for articulation of a movable finger (14) around a pivoting spindle (16) between a closed position and an open position, said finger (14) comprising :
- a latching element (22) situated opposite the pivoting spindle (16) to cooperate with the securing element (20) in the closed position,
- a return spring (24) to return the finger (14) to the closed position,
- a locking ring (18) mounted coaxially around the finger (14) between a first locked position enabling positive locking of the finger in the closed position to be achieved and a second unlocked position enabling the finger (14) to be moved to the open position, said ring being of a smaller length than that of the finger (14) and being permanently separated from the spindle (16) by an axial gap,
**characterized in that** the finger (14) is equipped with a locking bolt (40) having an operating component designed to cooperate alternately with a hole (50) or a notch (56) arranged in the locking ring (18) with a preset angular offset, respectively in the first locked position to perform said positive locking in rotation of said ring when the operating component is inserted in the hole (50), and in a second unlocked position with formation of an internal link with a hang-up (58) between the ring (18) and said finger (14) when the operating component engages in the notch (56), movement from the second unlocked position to the first locked position being achieved manually by a rotational movement of the ring (18) causing the hang-up to be released at the beginning of travel following the reaction of the ring (18) on the operating component, and insertion of the operating component in the hole (50) at the end of travel for positive locking of the ring (18) in rotation.

2. The snap-hook according to claim 1, **characterized in that** the manual movement of the ring (18) in rotation from the second unlocked position to the first locked position and vice-versa is performed either clockwise or in the opposite direction.

3. The snap-hook according to claim 1 or 2, **characterized in that** the locking bolt (40) comprises a telescopic pin (42) fitted in an orifice (44) of the finger (14) and associated to a compression spring (48) urging the pin (42) in a radial direction for engagement in the hole (50) or the notch (56) of the ring (18), movement from the first locked position to the second unlocked position requiring the pin (42) to previously depressed to an inactive position before the ring (18) is actuated in rotation.

4. The snap-hook according to claim 3, **characterized in that** the hole (50) passes radially through the wall of the locking ring (18), whereas the notch (56) is blind and presents a conjugate shape to that of the stopping surface (46) of the pin (42)

5. The snap-hook according to claim 1, **characterized in that** the top edge of the locking ring (18) is provided with a slot (38) allowing the latching element (22) to move into or out of the securing element (20) when the locking ring (18) is in the second unlocked position.
